# EUROPÄISCHE PATENTSCHRIFT

(11) **EP 0 727 590 B1**
(45) Veröffentlichungstag und Bekanntmachung des Hinweises auf die Patenterteilung: **12.01.2000**
(21) Anmeldenummer: 95118586.7
(22) Anmeldetag: 25.11.1995
(51) Int. Cl.: F16D 65/02

(54) **Schwingungstilger**
Vibration absorber
Amortisseur de vibrations

(30) Priorität: 15.02.1995 DE 19505000
(43) Veröffentlichungstag der Anmeldung: 21.08.1996
(73) Patentinhaber: Dr.Ing.h.c. F. Porsche Aktiengesellschaft, 70435 Stuttgart (DE)
(72) Erfinder: Von Sivers, Rolf, D-71287 Weissach-Flacht (DE); Kappich, Joachim, D-75378 Bad Liebenzell (DE)

(56) Entgegenhaltungen:
- DE-B- 1 450 620
- DE-C- 3 736 126

## Beschreibung

Die Erfindung bezieht sich auf einen Schwingungstilger für eine Bremseinrichtung nach dem Oberbegriff des Anspruchs 1.

Aus der DE 37 36 126 C2 ist zur Verminderung von Quietschgeräuschen an einer Bremseinrichtung ein als Tilger wirkendes längliches Massenelement bekannt. Dies ist im Bereich des größten Schwingungsausschlags des Bremssattels angeordnet.

Aufgabe der Erfindung ist es, einen Schwingungstilger für eine Bremseinrichtung zu schaffen, der einen kompakten Aufbau besitzt und Quietschgeräusche an der Bremseinrichtung wirksam reduziert.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß bei Festsätteln und insbesondere bei einem schwimmend gelagerten Bremsrahmen den deutlich ausgeprägten Schwingungen des sich zu einem Parallelogramm verformten Schwimmrahmens entgegengewirkt wird und über den Tilger die Geräusche weitestgehend abgebaut werden. Diese ursächlich für das Bremsenquietschen verantwortlichen Schwingungen, hervorgerufen durch die Verformung des Schwimmrahmens, wird durch die Anordnung des Schwingungstilgers im Bereich des höchsten Beschleunigungspegels unterbunden.

Der Tilger ist als geschlossenes System ausgeführt und besteht aus in einem Gehäuse über Federn stirnseitig gehaltene Schwingmasse. Diese ist in einem Fluid, wie beispielsweise einem Silikonöl angeordnet. Die Masse ist frei, d.h. beabstandet zwischen der Innenwandung des Gehäuses zu einer zentrischen Befestigungsschraube gehalten. Die Masse kann auch mit dem Gehäuse in Kontakt treten, wodurch ein zusätzlicher Kraftschluß der Masse mit dem Gehäuse entsteht.

Das Gehäuse für die Schwingmasse weist einen Gewindezapfen auf, der gleichzeitig als Verbindungsbolzen für den Schwimmsattel dient. Das Gehäuse ist über einen Deckel abgeschlossen, der einen in das Gehäuse ragenden Absatz besitzt, an dem sich ein Federpaket abstützt.

Die Federpakete der Schwingmasse, bestehend aus Tellerfederpaketen, welche die Masse in einer definierten Lage im Gehäuse halten. Hierzu ist die Masse mit einem stirnseitigen Ansatz versehen, an dem das eine Federpaket zentrisch gehalten ist.

Der aus dem Gehäuse mit angedrehtem Gewindezapfen bestehende Tilger wird anstelle der Gehäuse-/Rahmenverbindungsschraube mit definiertem Drehmoment eingebaut. Der gesamte Tilgeraufbau ist im Gehäuse untergebracht und somit unempfindlich gegen Umwelt- und Montageeinflüsse. Als Tilgermasse dient ein einfach herzustellendes Drehteil, welches über die Tellerfederpakete zwischen dem Gehäuse und dem Gehäusedeckel bzw. dem Abschlussdeckel eingespannt wird. Da die Tellerfedern eine degressive Federkennlinie besitzen, ist eine definierte Federvorspannung erforderlich. Eingestellt wird die Federvorspannung durch die genaue Tolerierung der Maße der Gehäuselänge, Massenlänge, Federpaketlänge sowie der Länge des Absatzes am Gehäusedeckel.

Durch Befüllung des Gehäuses mit einem Fluid wird die Resonanzfrequenz des Einmassenschwingers gedämpft und somit eine größere Bandbreite erreicht. Damit können Schwankungen der Quietschfrequenzen aufgenommen werden. Bevorzugt wird als Fluid zähflüssiges Siliconöl. Über die Ölmenge kann der Grad der Dämpfung eingestellt werden. Die Dämpfung entsteht durch Pantschverluste der Schwingmasse im Öl sowie durch den zusätzlichen Kraftfluß der Masse mit dem Gehäuse. Durch umfangseitige Nuten in der Schwingmasse kann die wirksame Oberfläche des Massenkörpers vergrößert werden. Mit ansteigender Ölmenge wird die Resonanzfrequenz zu höheren Frequenzen verschoben. Dies wird durch die bei diesen hohen Frequenzen wirkenden Steifigkeit des Öles bewirkt. Da Öl eine unkompressible Flüssigkeit ist, darf diese nicht in den Zwischenraum Gehäuseboden und Tellerfeder eingefüllt werden, da dies zu einem Blockieren der schwingenden Masse führen würde.

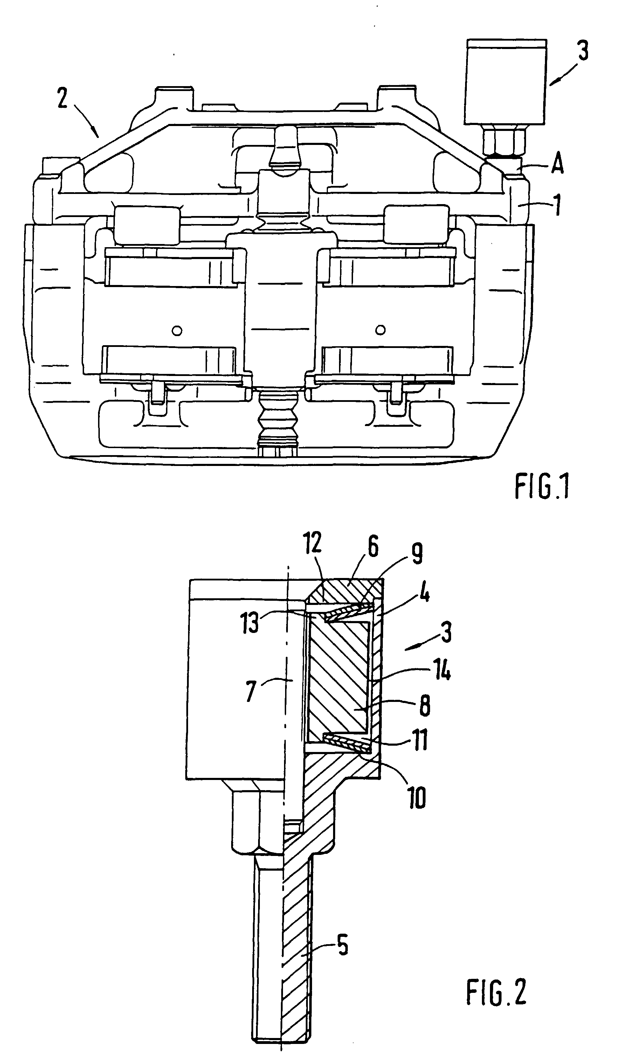

Ein Ausführungsbeispiel der Erfindung ist in der Zeichnung dargestellt und wird im folgenden näher beschrieben. Es zeigen
- Fig. 1: eine Bremseinrichtung mit angebautem Schwingungstilger,
- Fig. 2: eine Darstellung des Schwingungstilgers im Schnitt,
- Fig. 3: eine weitere Ausführung der Schwingmasse des Tilgers mit Umfangsnuten.

An einem Schwimmsattel 1 einer Bremseinrichtung 2 ist im Bereich der höchsten Beschleunigungspegel A ein Schwingungstilger 3 angeordnet. Dieser Schwingungstilger 3 besteht aus einem Gehäuse 4 mit einem Gewindezapfen 5 und einem Abschlußdeckel 6, der über eine Schraube 7 mit dem Gehäuse 4 verbunden ist.

Innerhalb des Gehäuses 1 ist eine Schwingmasse 8 über jeweils stirnseitig angeordnete Tellerfederpakete 9 und 10 in einer frei schwebenden Lage zum Gehäuse 4 und zur Schraube 7 gehalten. Im Raum 11 des Gehäuses 4 ist ein Fluid, wie Silikonöl angeordnet.

Die Tellerfederpakete 9 und 10 stützen sich eckseitig des Abschlußdeckels 6 an einem Ansatz 12 sowie an einer Andrehung 13 der Schwingmasse 8 ab. Zur Schraube 7 und zum Gehäuse 4 ist die Schwingmasse 8 mit Abstand über die Federpakete 9, 10 gehalten.

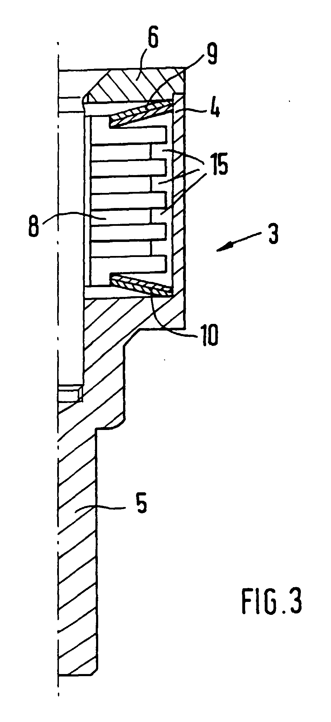

Zur Vergrößerung der Außenumfangsfläche der Schwingmasse 8 ist diese, wie in Fig. 3 näher gezeigt, mit Umfangsnuten 15 versehen.

Bei einem Schwingen des Schwimmrahmens 1 der Bremseinrichtung 2 entzieht der Tilger 3 durch sein, auf die Problematik der Einrichtung abgestimmtes Eigenschwingungsverhalten, Energie und verringert dadurch Amplituten und die damit verbundene Schallabstrahlung des Schwimmrahmens, wodurch eine Geräuschabsenkung erzielt wird.

## Patentansprüche

1. Schwingungstilger (3) zur Vermeidung eines Bremsenquietschens an einem Bremssattel, **dadurch gekennzeichnet,** daß der Schwingungstilger eine über Federn (9, 10) geführte Schwingmasse (8) in einem geschlossenen Gehäuse (4) umfasst, dessen Hohlraum (11) mit einem Fluid gefüllt ist.

2. Schwingungstilger nach Anspruch 1, **dadurch gekennzeichnet,** daß das Gehäuse (4) einen Gewindezapfen (5) aufweist, der eine Verbindungsschraube für den Bremssattel bildet und mit dem Gehäuse (4) ein Abschlußdeckel (6) über eine zentrische Schraube (7) befestigbar ist, die von der Schwingmasse (8) beabstandet umgeben ist.

3. Schwingungstilger nach den Ansprüchen 1 oder 2, **dadurch gekennzeichnet,** daß die Schwingmasse (8) im Gehäuse (4) jeweils über stirnseitig angeordnete als Tellerfederpakete ausgebildete Federn (9,10) frei schwebend in Lage gehalten ist und diese Tellerfederpakete eine definierte Vorspannung aufweisen.

4. Schwingungstilger nach den Ansprüchen 1, 2 oder 3, **dadurch gekennzeichnet,** daß der Abschlußdeckel (6) einen in den Hohlraum (11) des Gehäuses (4) ragenden Absatz (12) aufweist,dessen Innenfläche eine Abstützung für die Tellerfederpakete bildet.

5. Schwingungstilger nach Anspruch 1 oder einem der vorhergehenden Ansprüche, **dadurch gekennzeichnet,** daß die Schwingmasse (8) in der Außenumfangsfläche Umfangsnuten (15) aufweist.

6. Schwingungstilger nach Anspruch 1 oder einem der vorhergehenden Ansprüche, **dadurch gekennzeichnet,** daß das Fluid im Tilgergehäuse (4) aus einem Siliconöl besteht.

## Claims

1. A vibration absorber (3) for preventing brake squealing of a brake calliper, **characterized in that** the vibration absorber comprises a vibrating mass (8) guided by way of springs (9, 10) in a closed housing (4), the cavity (11) of which is filled with a fluid.

2. A vibration absorber according to Claim 1, **characterized in that** the housing (4) is provided with a threaded pin (5) which forms a connexion bolt for the brake calliper, and a closure cover (6) is securable to the housing (4) by way of a central bolt (7) surrounded with a spacing by the vibrating mass (8).

3. A vibration absorber according to Claim 1 or 2, **characterized in that** the vibrating mass (8) is held in position in the housing (4) in a freely floating manner by way of respective springs (9, 10) arranged at the end faces and constructed in the form of stacks of spring plates, and the said stacks of spring plates have a defined pre-stressing.

4. A vibration absorber according to Claim 1, 2 or 3, **characterized in that** the closure cover (6) is provided with an offset (12) which projects into the cavity (11) of the housing (4) and the inner face of which forms a support for the stacks of spring plates.

5. A vibration absorber according to Claim 1 or one of the preceding Claims, **characterized in that** the vibrating mass (8) is provided with peripheral grooves (15) in the external peripheral face.

6. A vibration absorber according to Claim I or one of the preceding Claims, **characterized in that** the fluid in the absorber housing (4) consists of a silicone oil.

## Revendications

1. Amortisseur d'oscillations (1) destiné à éviter un crissement de frein sur un étrier de frein, caractérisé en ce que l'amortisseur d'oscillations comprend une masse oscillante (8) guidée par des ressorts (9, 10) dans un boîtier (4) fermé, dont la cavité (11) est remplie d'un fluide.

2. Amortisseur d'oscillations selon la revendication 1, caractérisé en ce que le boîtier (4) présente une tige filetée (5) qui forme une vis de liaison pour l'étrier de frein et en ce qu'un couvercle de fermeture (6) peut être fixé avec le boîtier (4). par une vis centrée (7) qui est entourée à distance par la masse oscillante (8).

3. Amortisseur d'oscillations selon les revendications 1 ou 2, caractérisé en ce que la masse oscillante (8) est maintenue en positions librement flottante, dans le boîtier (4) par des ressorts (9, 10) réalisés sous la forme de paquets de ressorts Belleville disposés frontalement et en ce que ces paquets de ressorts Belleville présentent une précontrainte définie.

4. Amortisseur d'oscillations selon les revendications 1, 2 ou 3, caractérisé en ce que le couvercle de fermeture (6) présente un gradin (12) pénétrant dans la cavité (11) du boîtier (4) dont la surface intérieure forme un appui pour les paquets de ressorts Belleville.

5. Amortisseur d'oscillations selon la revendication 1 ou l'une des revendications précédentes, caractérisé en ce que la masse oscillante (8) présente des rainures périphériques (15) dans la surface périphérique extérieure.

6. Amortisseur d'oscillations selon la revendication 1 ou l'une des revendications précédentes, caractérisé en ce que le fluide dans le boîtier (4) de l'amortisseur est une huile de silicone.
